# EUROPEAN PATENT SPECIFICATION

(11) **EP 3 636 586 B1**
(45) Date of publication and mention of the grant of the patent: **13.08.2025**
(21) Application number: 17912761.8
(22) Date of filing: 28.08.2017
(51) Int. Cl.: B66F 9/24, B60G 17/016, B61B 13/00, B62D 49/08

(54) **AUTOMATED GUIDED VEHICLE**
AUTOMATISIERTES GEFÜHRTES FAHRZEUG
VÉHICULE GUIDÉ AUTOMATISÉ

(30) Priority: 05.06.2017 JP 2017110596
(43) Date of publication of application: 15.04.2020
(73) Proprietor: Mitsubishi Logisnext Co., Ltd., Kyoto 617-8585 (JP)
(72) Inventor: YAMASAKI, Tomohisa, Nagaokakyo-shi Kyoto 617-8585 (JP); NODA, Hiroaki, Nagaokakyo-shi Kyoto 617-8585 (JP)
(74) Representative: Becker Kurig & Partner Patentanwälte mbB
(86) International application number: PCT/JP2017/030656
(87) International publication number: WO 2018/225279

(56) References cited:
- JP-A- 2002 274 139
- JP-A- 2003 118 568
- JP-A- 2003 118 568
- JP-A- H0 725 411
- JP-A- H09 142 780
- JP-A- H09 315 302
- JP-A- H1 072 194
- JP-A- H11 139 126
- JP-A- H11 199 197

## Description

### BACKGROUND OF THE INVENTION

### Technical Field

The present invention relates to an automated guided vehicle equipped with a fall prevention device.

### Related Art

Generally, an outrigger is used in the fall prevention device of the automated guided vehicle. As the automated guided vehicle equipped with the outrigger, for example, the one described in patent literature 1 or the one shown in FIG. 5 is known.

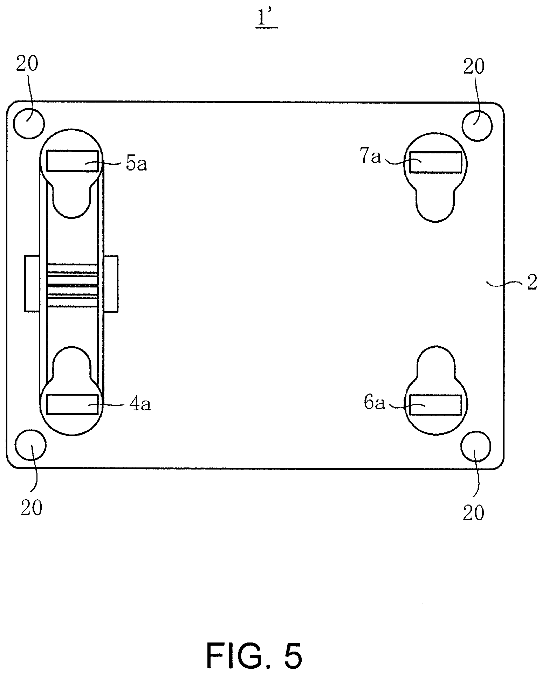

In an automated guided vehicle 1' shown in FIG. 5, running wheels 4a-7a are arranged in four corners of a vehicle body 2, and hydraulic outriggers 20 are arranged outside the running wheels 4a-7a. The automated guided vehicle 1' can prevent the vehicle body 2 from sloping and falling over due to the weight of a transferred workpiece by bringing the outrigger 20 into contact with a floor during a cargo handling operation.

### [Literature of related art]

### [Patent literature]

Patent literature 1: Japanese Laid-Open No. 5-310103
JP 2003 118568 A provides an automatic guided vehicle comprising a driving wheel that receives the driving force of a driving means for running to run a car body, a suspension unit for pressing the driving wheel to the floor surface of the running road, and a control part for controlling a pressing force of pressing the driving wheel to the floor surface with the suspension unit.

### SUMMARY

### [Problems to be solved]

Meanwhile, when the automated guided vehicle 1' is used in a clean environment such as a clean room, arrangement of an electric outrigger in place of the hydraulic outrigger 20 is required. The electric outrigger is increased in the scale compared with the hydraulic outrigger 20, and thus there is a problem that the vehicle body 2 is increased in the scale if the electric outrigger is arranged in the automated guided vehicle 1'.

The present invention is accomplished based on the above condition and provides an automated guided vehicle which can be used in a clean environment and in which increases in the scale of a vehicle body can be suppressed.

### [Means to Solve Problems]

To solve the above problem, the automated guided vehicle of the present invention includes: a vehicle body; a fork, performing a cargo handling operation outside the vehicle body; a first drive unit, disposed on one side of the vehicle body and having a first running wheel; a second drive unit, disposed on the other side of the vehicle body and having a second running wheel; a drive linkage, linking the first drive unit and the second drive unit so that the first drive unit and the second drive unit oscillate vertically opposite to each other; a fall prevention device, preventing the vehicle body from falling over; and a first sensor and a second sensor; the fall prevention device includes: a control unit; a first electric actuator, having a first head that moves vertically under the control of the control unit and being attached to a frame of the vehicle body above the first drive unit; and a second electric actuator, having a second head that moves vertically under the control of the control unit and being attached to the frame above the second drive unit; the first electric actuator prevents the vehicle body from falling over toward the one side by moving the first head downward to bring the first head into contact with the drive linkage, and the second electric actuator prevents the vehicle body from falling over toward the other side by moving the second head downward to bring the second head into contact with the drive linkage; the first electric actuator and the second electric actuator are attached to an upper surface of the frame, and the frame has a first opening portion which is located above the first drive unit and through which the first head enters, and a second opening portion which is located above the second drive unit and through which the second head enters; the drive linkage includes a first contact member and a second contact member, the first contact member has a first head contact surface in contact with the first head in the first opening portion, and the second contact member has a second head contact surface in contact with the second head in the second opening portion; and the first sensor attached to the first contact member is disposed via a bracket in the first opening portion and directly detects the contact of the first head with the first head contact surface, and the second sensor attached to the second contact member is disposed via a bracket in the second opening portion and directly detects the contact of the second head with the second head contact surface.

In the automated guided vehicle, preferably, the fork is a slide fork which performs the cargo handling operation on the one side and the other side; in a case of the cargo handling operation on the one side, the control unit brings the first head into contact with the drive linkage without bringing the second head into contact with the drive linkage; in a case of the cargo handling operation on the other side, the control unit brings the second head into contact with the drive linkage without bringing the first head into contact with the drive linkage.

The automated guided vehicle can be a configuration in which the first electric actuator includes a first motor rotating under the control of the control unit, and a first electric jack having the first head that moves vertically corresponding to the rotation of the first motor, the second electric actuator includes a second motor rotating under the control of the control unit, and a second electric jack having the second head that moves vertically corresponding to the rotation of the second motor, and the first motor and the second motor are disposed opposite to each other inside the vehicle body.

The automated guided vehicle can be a configuration in which the vehicle body includes, above the frame, a storage room for storing the fork along with a transferred workpiece, the storage room includes a shutter which is opened and closed under the control of the control unit, and the control unit opens the shutter after bringing the first head or the second head into contact with the drive linkage, and closes the shutter after the end of the cargo handling operation to release the contact with the drive linkage.

### [Effect]

According to the present invention, an automated guided vehicle can be provided which can be used in a clean environment and in which increases in the scale of a vehicle body can be suppressed.

### BRIEF DESCRIPTION OF THE DRAWINGS

FIG. 1(A) to FIG 1(C) are diagrams showing an automated guided vehicle of the present invention, wherein FIG. 1(A) is a plan view, FIG. 1(B) is a left side view, and FIG. 1(C) is a rear view.
FIG. 2 is a bottom view of the automated guided vehicle of the present invention.
FIG. 3 is diagram showing a fall prevention device of the present invention and a peripheral configuration of the fall prevention device.
FIG. 4(A) and FIG. 4(B) are diagrams showing the fall prevention device of the present invention, wherein FIG. 4(A) is a diagram during a cargo handling operation, and FIG. 4(B) is a diagram after the end of the cargo handling operation.
FIG. 5 is a bottom view of a conventional automated guided vehicle.

### DESCRIPTION OF THE EMBODIMENTS

In the following, embodiments of an automated guided vehicle of the present invention is described with reference to the attached drawings. Besides, front-rear, left-right, and up-down directions are considered taking a vehicle body of the automated guided vehicle as reference unless otherwise noted.

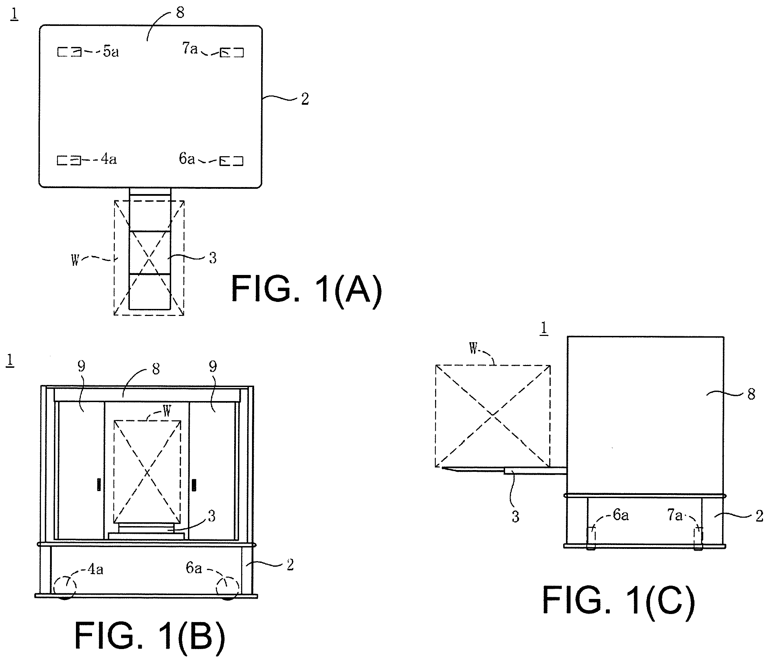

In FIG. 1(A) - FIG. 1(C), an automated guided vehicle 1 of one embodiment of the present invention is shown. The automated guided vehicle 1 is used, for example, in a clean environment such as a clean room. The automated guided vehicle 1 includes a vehicle body 2 and a slide fork 3 arranged on the vehicle body 2.

In four corners of the bottom surface side of the vehicle body 2, a first running wheel (a left-front wheel) 4a, a second running wheel (a right-front wheel) 5a, a third running wheel (a left-rear wheel) 6a and a fourth running wheel (a right-rear wheel) 7a are arranged. In addition, the vehicle body 2 includes a storage room 8 for storing the slide fork 3 along with a transferred workpiece W. The storage room 8 includes a shutter 9. The shutter 9 is configured to be opened just before a cargo handling operation and be closed after the cargo handling operation.

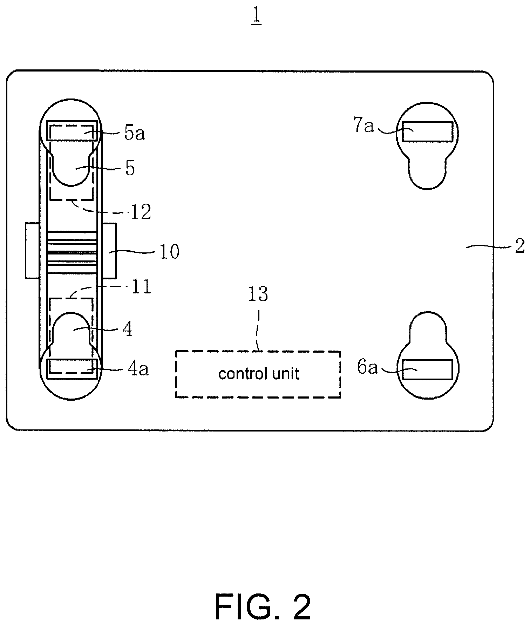

The shutter 9 is arranged not only on the left side of the storage room 8 but also on the right side (the side of the second running wheel 5a and the fourth running wheel 7a). When the slide fork 3 in the storage room 8 is made to slide to the left side and the cargo handling operation is performed on the left outside of the vehicle body 2, the shutter 9 on the left is opened. On the other hand, when the slide fork 3 in the storage room 8 is made to slide to the right side and the cargo handling operation is performed on the right outside of the vehicle body 2, the shutter 9 on the right is opened. A slide operation of the slide fork 3 and an opening and closing operation of the shutter 9 are performed under the control of a control unit 13 shown in FIG. 2. Besides, the slide fork 3 can gyrate in the storage room 8 under the control of the control unit 13.

As shown in FIG. 2, the automated guided vehicle 1 includes: a first drive unit 4 including the first running wheel 4a, a second drive unit 5 including the second running wheel 5a, a drive linkage 10 linking the first drive unit 4 and the second drive unit 5, and a fall prevention device (11, 12, 13) for preventing the vehicle body 2 from falling over during the cargo handling operation.

The first drive unit 4 has the first running wheel 4a, a motor for driving the first running wheel 4a, a speed reduction mechanism and the like. Similarly, the second drive unit 5 has the second running wheel 5a, a motor for driving the second running wheel 5a, a speed reduction mechanism and the like.

The drive linkage 10 is a linking mechanism which links the first drive unit 4 and the second drive unit 5 so that the first drive unit 4 and the second drive unit 5 oscillate vertically opposite to each other. According to the drive linkage 10, for example, when the first drive unit 4 oscillates upward due to the sloping of a floor or the like, the second drive unit 5 oscillates downward and thus a posture of the vehicle body 2 is kept horizontal.

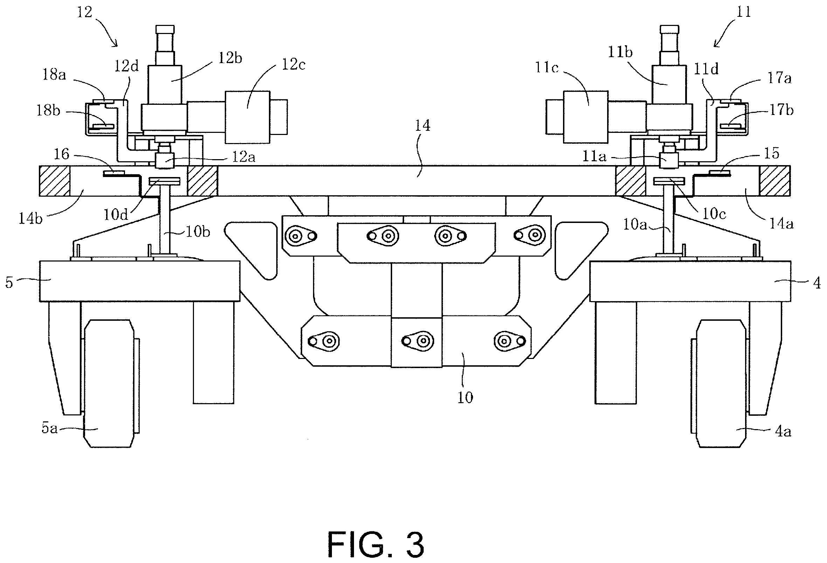

As shown in FIG. 3, the drive linkage 10 includes a first contact member 10a and a second contact member 10b. The first contact member 10a has a first head contact surface 10c in contact with the first head 11a of the fall prevention device. The second contact member 10b has a second head contact surface 10d in contact with the second head 12a of the fall prevention device.

When the first head 11a is in contact with the first head contact surface 10c, at least the first drive unit 4 is prevented from oscillating upward. In other words, the vehicle body 2 is prevented from sloping toward the first drive unit 4 side. When the second head 12a is in contact with the second head contact surface 10d, at least the second drive unit 5 is prevented from oscillating upward. In other words, the vehicle body 2 is prevented from sloping toward the second drive unit 5 side.

The fall prevention device of this embodiment includes a first electric actuator 11, a second electric actuator 12, and the control unit 13, but does not include a hydraulic actuator (for example, a hydraulic outrigger). Therefore, the fall prevention device of the embodiment has no risk of oil leakage and is suitable for use in a clean environment.

Furthermore, four devices are required when the fall prevention device is configured by an outrigger; however, the fall prevention device is configured by two devices (the first electric actuator 11 and the second electric actuator 12) in this embodiment. Therefore, in the embodiment, decreases in the scale of the fall prevention device can be achieved.

As shown in FIG. 2 and FIG. 3, the first electric actuator 11 is attached to a frame 14 of the vehicle body 2 above the first drive unit 4. The first electric actuator 11 includes a first electric jack 11b having the first head 11a, a first motor 11c, and a first dog 11d.

The first motor 11c rotates under the control of the control unit 13. The first electric jack 11b moves the first head 11a vertically corresponding to the rotation of the first motor 11c. For example, the first head 11a moves downward in a case of a positive rotation of the first motor 11c, and the first head 11a moves upward in a case of a negative rotation of the first motor 11c. The first dog 11d is attached to the first electric jack 11b so as to move vertically along with the first head 11a.

The second electric actuator 12 is attached to the frame 14 of the vehicle body 2 above the second drive unit 5. The second electric actuator 12 includes a second electric jack 12b having the second head 12a, a second motor 12c, and a second dog 12d.

The second motor 12c rotates under the control of the control unit 13. The second electric jack 12b moves the second head 12a vertically corresponding to the rotation of the second motor 12c. For example, the second head 12a moves downward in a case of a positive rotation of the second motor 12c, and the second head 12a moves upward in a case of a negative rotation of the second motor 12c. The second dog 12d is attached to the second electric jack 12b so as to move vertically along with the second head 12a.

The frame 14 of the vehicle body 2 has a first opening portion 14a which is located above the first drive unit 4 and through which the first head 11a enters, and a second opening portion 14b which is located above the second drive unit 5 and through which the second head 12a enters. Inside the first opening portion 14a, a first sensor 15 attached to the first contact member 10a of the drive linkage 10 is disposed via a bracket. Inside the second opening portion 14b, a second sensor 16 attached to the second contact member 10b of the drive linkage 10 is disposed via a bracket.

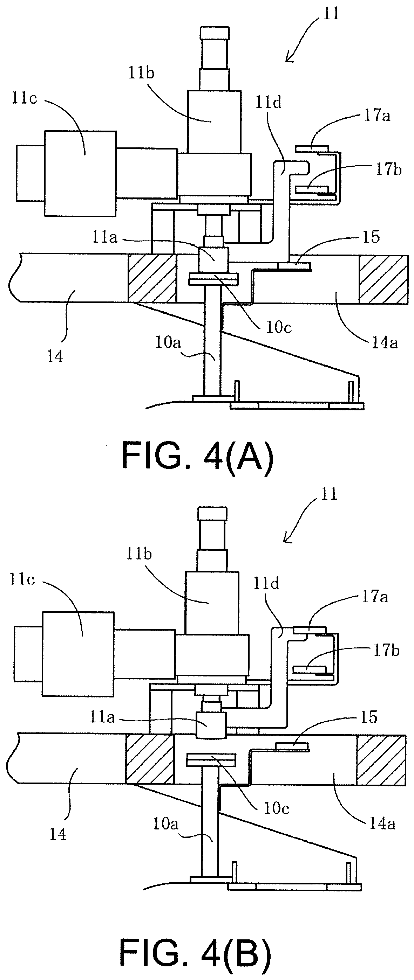

The first sensor 15 indirectly detects the contact of the first head 11a with the first head contact surface 10c by detecting a lower end of the first dog 11d (see FIG. 4(A)). A detection signal of the first sensor 15 is output to the control unit 13. The control unit 13 stops the rotation of the first motor 11c when the detection signal of the first sensor 15 is input. According to the invention, the first sensor 15 directly detects the contact of the first head 11a with the first head contact surface 10c.

The second sensor 16 indirectly detects the contact of the second head 12a with the second head contact surface 10d by detecting a lower end of the second dog 12d. A detection signal of the second sensor 16 is output to the control unit 13. The control unit 13 stops the rotation of the second motor 12c when the detection signal of the second sensor 16 is input. According to the invention, the second sensor 16 directly detects the contact of the second head 12a with the second head contact surface 10d.

In the first electric actuator 11, a first upper limit sensor 17a and a first lower limit sensor 17b are arranged. The first upper limit sensor 17a indirectly detects that the movement of the first head 11a reaches the upper limit by detecting an upper end of the first dog 11d. The first lower limit sensor 17b indirectly detects that the movement of the first head 11a reaches the lower limit by detecting the upper end of the first dog 11d. Detection signals of the first upper limit sensor 17a and the first lower limit sensor 17b are output to the control unit 13. The control unit 13 stops the rotation of the first motor 11c when the detection signal of the first upper limit sensor 17a or the first lower limit sensor 17b is input.

In the second electric actuator 12, a second upper limit sensor 18a and a second lower limit sensor 18b are arranged. The second upper limit sensor 18a indirectly detects that the movement of the second head 12a reaches the upper limit by detecting an upper end of the second dog 12d. The second lower limit sensor 18b indirectly detects that the movement of the second head 12a reaches the lower limit by detecting the upper end of the second dog 12d. Detection signals of the second upper limit sensor 18a and the second lower limit sensor 18b are output to the control unit 13. The control unit 13 stops the rotation of the second motor 12c when the detection signal of the second upper limit sensor 18a or the second lower limit sensor 18b is input.

As shown in FIG. 3, in the first electric actuator 11, an area of the first motor 11c (an area on the internal side of the first electric jack 11b) is larger than an area of the first upper limit sensor 17a and the first lower limit sensor 17b (an area on the external side of the first electric jack 11b). Similarly, in the second electric actuator 12, an area of the second motor 12c (an area on the internal side of the second electric jack 12b) is larger than an area of the second upper limit sensor 18a and the second lower limit sensor 18b (an area on the external side of the second electric jack 12b). Therefore, in the embodiment, the first motor 11c and the second motor 12c are disposed opposite to each other inside the vehicle body 2, and increases in the scale of the vehicle body 2 are suppressed.

The control unit 13 consists of a control IC for example and is arranged inside the vehicle body 2. In the following, a case in which the cargo handling operation is performed on the left side of the vehicle body 2 (the side of the first running wheel 4a and the third running wheel 6a) is used as an example to describe the control of the control unit 13.

When the automated guided vehicle 1 arrives at a station to perform the cargo handling operation, the control unit 13 rotates (positively rotates) the first motor 11c of the first electric actuator 11 to bring the first head 11a into contact with the first head contact surface 10c (see FIG. 4(A)).

At this time, the control unit 13 does not rotate the second motor 12c of the second electric actuator 12 and maintains a state that the second head 12a is separated from the second head contact surface 10d. The reason is that it is preferable not to increase the contact surface beyond necessity in a clean environment. Besides, when the cargo handling operation is performed on the right side of the vehicle body 2, the second head 12a is brought into contact with the second head contact surface 10d in the state that the first head 11a is separated from the first head contact surface 10c.

Next, the control unit 13 opens the shutter 9 on the left of the storage room 8 to perform the cargo handling operation. When the shutter 9 on the left is completely opened, the control unit 13 makes the slide fork 3 in the storage room 8 slide to the left side and loads the transferred workpiece W on the slide fork 3 (for example, see FIG. 1(A)). At this time, the first head 11a is in contact with the first head contact surface 10c, and thus the vehicle body 2 is prevented from sloping to the left side. That is, the vehicle body 2 does not fall over to the left side even if a fall moment of the transferred workpiece W acts on the vehicle body 2.

Next, the control unit 13 makes the slide fork 3 loaded with the transferred workpiece W slide into the vehicle body 2 and stores the slide fork 3 loaded with the transferred workpiece W into the storage room 8. When the transferred workpiece W is stored in the storage room 8 (the cargo handling operation ends), the control unit 13 closes the shutter 9.

Next, the control unit 13 rotates (negatively rotates) the first motor 11c of the first electric actuator 11 and separates the first head 11a from the first head contact surface 10c (see FIG. 4(B)). When the first head 11a is separated from the first head contact surface 10c, the automated guided vehicle 1 restarts running.

After all, in the automated guided vehicle 1 of the embodiment, the fall prevention device is configured by the first electric actuator 11, the second electric actuator 12, and the control unit 13, and no hydraulic actuator (for example, a hydraulic outrigger) is used. Accordingly, the automated guided vehicle 1 of the embodiment is suitable for use in a clean environment.

In addition, the first electric actuator 11 and the second electric actuator 12 directly fix the drive linkage 10 instead of holding down the floor as the outrigger does, and thus there is no limit of being disposed outside the first drive unit 4 and the second drive unit 5. Accordingly, the automated guided vehicle 1 of the embodiment can suppresses increases in the scale of the vehicle body 2.

The embodiment of the automated guided vehicle of the present invention is described above, but the present invention is limited by the scope of the appended claims.

For example, the first electric actuator 11 can be changed in configuration as long as the first electric actuator 11 has the first head 11a that moves vertically under the control of the control unit 13. Similarly, the second electric actuator 12 can be changed in configuration as long as the second electric actuator 12 has the second head 12a that moves vertically under the control of the control unit 13.

The fork of the present invention may be a fork other than the slide fork 3 as long as the fork is configured to perform the cargo handling operation outside the vehicle body 2.

### [Description of the Symbols]

- 1: automated guided vehicle
- 2: vehicle body
- 3: slide fork
- 4: first drive unit
- 5: second drive unit
- 4a-7a: first-fourth running wheels
- 8: storage room
- 9: shutter
- 10: drive linkage
- 11: first electric actuator
- 12: second electric actuator
- 13: control unit
- 14: frame
- 15: first sensor
- 16: second sensor
- 17a: first upper limit sensor
- 17b: first lower limit sensor
- 18a: second upper limit sensor
- 18b: second lower limit sensor

## Claims

1. An automated guided vehicle (1), comprising:
a vehicle body (2);
a fork (3), performing a cargo handling operation outside the vehicle body (2);
a first drive unit (4), disposed on one side of the vehicle body (2) and having a first running wheel (4a);
a second drive unit (5), disposed on the other side of the vehicle body (2) and having a second running wheel (5a); and
a fall prevention device, preventing the vehicle body (2) from falling over;
wherein the fall prevention device comprises:
a control unit (13);
a first electric actuator (11), having a first head (11a) that moves vertically under the control of the control unit (13) and being attached to a frame (14) of the vehicle body (2) above the first drive unit (4); and
a second electric actuator (12), having a second head (12a) that moves vertically under the control of the control unit (13) and being attached to the frame (14) above the second drive unit (5); a first sensor (15) and a second sensor (16); ;
the automated guided vehicle (1) being **characterized in** further comprising:
a drive linkage (10), linking the first drive unit (4) and the second drive unit (5) so that the first drive unit (4) and the second drive unit (5) oscillate vertically opposite to each other;
wherein the first electric actuator (11) prevents the vehicle body (2) from falling over toward the one side by moving the first head (11a) downward to bring the first head (11a) into contact with the drive linkage (10), and
the second electric actuator (12) prevents the vehicle body (2) from falling over toward the other side by moving the second head (12a) downward to bring the second head (12a) into contact with the drive linkage (10);
wherein the first electric actuator (11) and the second electric actuator (12) are attached to an upper surface of the frame (14), and
the frame (14) has a first opening portion (14a) which is located above the first drive unit (4) and through which the first head (11a) enters, and a second opening portion (14b) which is located above the second drive unit (5) and through which the second head (12a) enters;
wherein the drive linkage (10) comprises a first contact member (10a) and a second contact member (10b),
the first contact member (10a) has a first head contact surface (10c) in contact with the first head (11a) in the first opening portion (14a), and
the second contact member (10b) has a second head contact surface (10d) in contact with the second head (12a) in the second opening portion (14b); and
wherein the first sensor (15) attached to the first contact member (10a) is disposed via a bracket in the first opening portion (14a) and directly detects the contact of the first head (11a) with the first head contact surface (10c), and
the second sensor (16) attached to the second contact member (10b) is disposed via a bracket in the second opening portion (14b) and directly detects the contact of the second head (12a) with the second head contact surface (10d).

2. The automated guided vehicle (1) according to claim 1,
wherein the fork (3) is a slide fork (3) which performs the cargo handling operation on the one side and the other side;
in a case of the cargo handling operation on the one side, the control unit (13) brings the first head (11a) into contact with the drive linkage (10) without bringing the second head (12a) into contact with the drive linkage (10);
in a case of the cargo handling operation on the other side, the control unit (13) brings the second head (12a) into contact with the drive linkage (10) without bringing the first head (11a) into contact with the drive linkage (10).

3. The automated guided vehicle (1) according to claims 1 or 2,
wherein the first electric actuator (11) comprises:
a first motor (11c) rotating under the control of the control unit (13), and
a first electric jack (11b) having the first head (11a) that moves vertically corresponding to the rotation of the first motor (11c);
the second electric actuator (12) comprises:
a second motor (12c) rotating under the control of the control unit (13), and
a second electric jack (12b) having the second head (12a) that moves vertically corresponding to the rotation of the second motor (12c); and
the first motor (11c) and the second motor (12c) are disposed opposite to each other inside the vehicle body (2).

4. The automated guided vehicle (1) according to any one of claims 1 to 3,
wherein the vehicle body (2) comprises, above the frame (14), a storage room (8) for storing the fork (3) along with a transferred workpiece (W);
the storage room (8) comprises a shutter (9) which is opened and closed under the control of the control unit (13); and
the control unit (13) opens the shutter (9) after bringing the first head (11a) or the second head (12a) into contact with the drive linkage (10), and closes the shutter (9) after the end of the cargo handling operation to release the contact with the drive linkage (10).

## Patentansprüche

1. Fahrerloses Transportfahrzeug (1), das Folgendes umfasst:
einen Fahrzeugaufbau (2),
eine Gabel (3), die eine Ladungsumschlagsoperation außerhalb des Fahrzeugaufbaus (2) durchführt,
eine erste Antriebseinheit (4), die auf der einen Seite des Fahrzeugaufbaus (2) angeordnet ist und ein erstes Laufrad (4a) aufweist,
eine zweite Antriebseinheit (5), die auf der anderen Seite des Fahrzeugaufbaus (2) angeordnet ist und ein zweites Laufrad (5a) aufweist, und
eine Fallverhinderungseinrichtung, die verhindert, dass der Fahrzeugaufbau (2) umfällt,
wobei die Fallverhinderungseinrichtung Folgendes umfasst:
eine Steuereinheit (13),
einen ersten elektrischen Stellantrieb (11), der einen ersten Kopf (11a) aufweist, der sich unter der Steuerung der Steuereinheit (13) in Vertikalrichtung bewegt und an einem Rahmen (14) des Fahrzeugaufbaus (2) oberhalb der ersten Antriebseinheit (4) befestigt ist, und
einen zweiten elektrischen Stellantrieb (12), der einen zweiten Kopf (12a) aufweist, der sich unter der Steuerung der Steuereinheit (13) in Vertikalrichtung bewegt und an dem Rahmen (14) oberhalb der zweiten Antriebseinheit (5) befestigt ist,
einen ersten Sensor (15) und einen zweiten Sensor (16),
wobei das fahrerlose Transportfahrzeug (1) **dadurch gekennzeichnet ist, dass** es ferner Folgendes umfasst:
ein Antriebsgestänge (10), das die erste Antriebseinheit (4) und die zweite Antriebseinheit (5) so verknüpft, dass die erste Antriebseinheit (4) und die zweite Antriebseinheit (5) in Vertikalrichtung entgegengesetzt zueinander schwingen,
wobei der erste elektrische Stellantrieb (11) durch Bewegen des ersten Kopfes (11a) nach unten, um den ersten Kopf (11a) in Kontakt mit dem Antriebsgestänge (10) zu bringen, verhindert, dass der Fahrzeugaufbau (2) zu der einen Seite hin umfällt, und
der zweite elektrische Stellantrieb (12) durch Bewegen des zweiten Kopfes (12a) nach unten, um den zweiten Kopf (12a) in Kontakt mit dem Antriebsgestänge (10) zu bringen, verhindert, dass der Fahrzeugaufbau (2) zu der anderen Seite hin umfällt,
wobei der erste elektrische Stellantrieb (11) und der zweite elektrische Stellantrieb (12) an einer oberen Fläche des Rahmens (14) befestigt sind und
der Rahmen (14) einen ersten Öffnungsabschnitt (14a), der oberhalb der ersten Antriebseinheit (4) angeordnet ist und durch den der erste Kopf (11a) eintritt, und einen zweiten Öffnungsabschnitt (14b), der oberhalb der zweiten Antriebseinheit (5) angeordnet ist und durch den der zweite Kopf (12a) eintritt, aufweist,
wobei das Antriebsgestänge (10) ein erstes Kontaktelement (10a) und ein zweites Kontaktelement (10b) umfasst,
das erste Kontaktelement (10a) eine erste Kopfkontaktfläche (10c) in Kontakt mit dem ersten Kopf (11a) in dem ersten Öffnungsabschnitt (14a) aufweist und
das zweite Kontaktelement (10b) eine zweite Kopfkontaktfläche (10d) in Kontakt mit dem zweiten Kopf (12a) in dem zweiten Öffnungsabschnitt (14b) aufweist und
wobei der erste Sensor (15), der an dem ersten Kontaktelement (10a) befestigt ist, über eine Halterung in dem ersten Öffnungsabschnitt (14a) angeordnet ist und den Kontakt des ersten Kopfes (11a) mit der ersten Kopfkontaktfläche (10c) unmittelbar erfasst, und
der zweite Sensor (16), der an dem zweiten Kontaktelement (10b) befestigt ist, über eine Halterung in dem zweiten Öffnungsabschnitt (14b) angeordnet ist und den Kontakt des zweiten Kopfes (12a) mit der zweiten Kopfkontaktfläche (10d) unmittelbar erfasst.

2. Fahrerloses Transportfahrzeug (1) nach Anspruch 1,
wobei die Gabel (3) eine Schiebegabel (3) ist, welche die Ladungsumschlagsoperation auf der einen Seite und der anderen Seite durchführt,
in einem Fall der Ladungsumschlagsoperation auf der einen Seite die Steuereinheit (13) den ersten Kopf (11a) in Kontakt mit dem Antriebsgestänge (10) bringt, ohne den zweiten Kopf (12a) in Kontakt mit dem Antriebsgestänge (10) zu bringen,
in einem Fall der Ladungsumschlagsoperation auf der anderen Seite die Steuereinheit (13) den zweiten Kopf (12a) in Kontakt mit dem Antriebsgestänge (10) bringt, ohne den ersten Kopf (11a) in Kontakt mit dem Antriebsgestänge (10) zu bringen.

3. Fahrerloses Transportfahrzeug (1) nach Anspruch 1 oder 2,
wobei der erste elektrische Stellantrieb (11) Folgendes umfasst:
einen ersten Motor (11c), der sich unter der Steuerung der Steuereinheit (13) dreht, und
einen ersten elektrischen Heber (11b), der den ersten Kopf (11a) aufweist, der sich in Vertikalrichtung entsprechend der Drehung des ersten Motors (11c) bewegt,
wobei der zweite elektrische Stellantrieb (12) Folgendes umfasst:
einen zweiten Motor (12c), der sich unter der Steuerung der Steuereinheit (13) dreht, und
einen zweiten elektrischen Heber (12b), der den zweiten Kopf (12a) aufweist, der sich in Vertikalrichtung entsprechend der Drehung des zweiten Motors (12c) bewegt, und
der erste Motor (11c) und der zweite Motor (12c) einander gegenüberliegend innerhalb des Fahrzeugaufbaus (2) angeordnet sind.

4. Fahrerloses Transportfahrzeug (1) nach einem der Ansprüche 1 bis 3,
wobei der Fahrzeugaufbau (2), oberhalb des Rahmens (14), einen Stauraum (8) zum Verstauen der Gabel (3) zusammen mit einem überführten Werkstück (W) umfasst,
der Stauraum (8) einen Verschluss (9) umfasst, der unter der Steuerung der Steuereinheit (13) geöffnet und geschlossen wird, und
die Steuereinheit (13) den Verschluss (9) nach dem Bringen des ersten Kopfes (11a) oder des zweiten Kopfes (12a) in Kontakt mit dem Antriebsgestänge (10) öffnet und den Verschluss (9) nach dem Ende der Ladungsumschlagsoperation schließt, um den Kontakt mit dem Antriebsgestänge (10) zu lösen.

## Revendications

1. Véhicule à guidage automatique (1), comprenant :
une carrosserie (2) ;
une fourche (3) effectuant une opération de manutention de charge à l'extérieur de la carrosserie (2) ;
une première unité d'entraînement (4), disposée d'un côté de la carrosserie (2) et dotée d'une première roue de roulement (4a) ;
une deuxième unité d'entraînement (5), disposée de l'autre côté de la carrosserie (2) et dotée d'une deuxième roue de roulement (5a) ; et
un dispositif antichute, empêchant la carrosserie (2) de basculer ;
dans lequel le dispositif antichute comprend :
une unité de commande (13) ;
un premier actionneur électrique (11), doté d'une première tête (11a) qui se déplace verticalement sous la commande de l'unité de commande (13) et fixé à un châssis (14) de la carrosserie (2) au-dessus de la première unité d'entraînement (4) ; et
un deuxième actionneur électrique (12), doté une deuxième tête (12a) qui se déplace verticalement sous la commande de l'unité de commande (13) et fixé au châssis (14) au-dessus de la deuxième unité d'entraînement (5) ; et
un premier capteur (15) et un deuxième capteur (16) ;
le véhicule à guidage automatique (1) étant **caractérisé en ce qu'**il comprend en outre :
une tringlerie d'entraînement (10) raccordant la première unité d'entraînement (4) et la deuxième unité d'entraînement (5) de sorte que la première unité d'entraînement (4) et la deuxième unité d'entraînement (5) oscillent verticalement l'une par rapport à l'autre ;
dans lequel le premier actionneur électrique (11) empêche la carrosserie du véhicule (2) de basculer d'un côté en déplaçant la première tête (11a) vers le bas pour amener la première tête (11a) en contact avec la tringlerie d'entraînement (10), et
le deuxième actionneur électrique (12) empêche la carrosserie du véhicule (2) de basculer de l'autre côté en déplaçant la deuxième tête (12a) vers le bas pour amener la deuxième tête (12a) en contact avec la tringlerie d'entraînement (10).
dans lequel le premier actionneur électrique (11) et le deuxième actionneur électrique (12) sont fixés à une surface supérieure du châssis (14), et
le châssis (14) possède une première partie d'ouverture (14a) qui est située au-dessus de la première unité d'entraînement (4) et à travers laquelle pénètre la première tête (11a) et une deuxième partie d'ouverture (14b) qui est située au-dessus de la deuxième unité d'entraînement (5) et à travers laquelle pénètre la deuxième tête (12a) ;
dans lequel la tringlerie d'entraînement (10) comprend un premier élément de contact (10a) et un deuxième élément de contact (10b),
le premier élément de contact (10a) possède une première surface de contact de tête (10C) en contact avec la première tête (11a) dans la première ouverture (14a) et
le deuxième élément de contact (10b) possède une deuxième surface de contact de tête (10d) en contact avec la deuxième tête (12a) dans la deuxième ouverture (14b),
dans lequel le premier capteur (15) fixé au premier élément de contact (10a) est disposé via un support dans la partie d'première ouverture (14a) et détecte directement le contact de la première tête (11a) avec la première surface de contact de tête (10c), et
le deuxième capteur (16) fixé au deuxième élément de contact (10b) est disposé via un support dans la partie (14b) et détecte directement le contact de la deuxième tête (12a) avec la deuxième surface de contact de tête (10d).

2. Véhicule à guidage automatique (1) selon la revendication 1,
dans lequel la fourche (3) est une fourche coulissante (3) qui effectue l'opération de manutention de charge d'un côté et de l'autre ;
dans le cas d'une opération de manutention de charge d'un côté, l'unité de commande (13) amène la première tête (11a) en contact avec la tringlerie d'entraînement (10) sans amener la deuxième tête (12a) en contact avec la tringlerie d'entraînement (10) ;
dans le cas d'une opération de manutention de charge de l'autre côté, l'unité de commande (13) amène la deuxième tête (12a) en contact avec la tringlerie d'entraînement (10) sans amener la première tête (11a) en contact avec la tringlerie d'entraînement (10).

3. Véhicule à guidage automatique (1) selon les revendications 1 ou 2, dans lequel le premier actionneur électrique (11) comprend :
un premier moteur (11c) tournant sous la commande de l'unité de commande (13), et
un premier vérin électrique (11b) dont la première tête (11a) se déplace verticalement en fonction de la rotation du premier moteur (11c) ;
le deuxième actionneur électrique (12) comprend :
un deuxième moteur (12c) tournant sous la commande de l'unité de commande (13), et
un deuxième vérin électrique (12b) dont la deuxième tête (12a) se déplace verticalement en fonction de la rotation du deuxième moteur (12c) ;
le premier moteur (11c) et le deuxième moteur (12c) sont disposés en vis-à-vis à l'intérieur de la carrosserie (2).

4. Véhicule à guidage automatique (1) selon une quelconque des revendications 1 à 3, dans lequel la carrosserie (2) comprend, au-dessus du châssis (14), un espace de rangement (8) pour ranger la fourche (3) ainsi qu'une pièce transférée (W) ;
cet espace de rangement (8) comprend un volet (9) dont l'ouverture et la fermeture sont commandées par l'unité de commande (13) ; et
l'unité de commande (13) ouvre le volet (9) après avoir mis la première tête (11a) ou la deuxième tête (12a) en contact avec la tringlerie d'entraînement (10), et ferme l'obturateur (9) après la fin de l'opération de manutention de charge pour libérer le contact avec la tringlerie d'entraînement (10).
